# EUROPÄISCHE PATENTSCHRIFT

(11) **EP 0 563 555 B1**
(45) Veröffentlichungstag und Bekanntmachung des Hinweises auf die Patenterteilung: **14.06.1995**
(21) Anmeldenummer: 93102357.6
(22) Anmeldetag: 16.02.1993
(51) Int. Cl.: F16D 65/02

(54) **Einrichtung zum Dämpfen von Belagschwingungen an Bremsen**
Device for damping vibrations of brake linings
Dispositif pour l'amortissement des vibrations des garnitures de freins

(30) Priorität: 01.04.1992 DE 4210729
(43) Veröffentlichungstag der Anmeldung: 06.10.1993
(73) Patentinhaber: Dr.Ing.h.c. F. Porsche Aktiengesellschaft, 70435 Stuttgart (DE)
(72) Erfinder: Martin, Roland, W-7251 Weissach (DE)

(56) Entgegenhaltungen:
- DE-A- 2 022 700
- DE-A- 2 058 045

## Beschreibung

Die Erfindung bezieht sich auf eine Einrichtung zum Dämpfen von Belagschwingungen an einer Bremse nach da Oberbegriff des Anspruchs 1.

Bei Scheibenbremsen kann im Betrieb ein Bremsenquietschen auftreten, das im wesentlichen durch Belagschwingungen erzeugt wird. Aus der DE-OS 20 58 045 ist eine Scheibenbremse bekannt, bei der zwischen dem Belag und den Bremskolben eine energievernichtende Einrichtung vorgesehen ist, die eine Bewegung zwischen dem Kolben und dem Belag dämpft und ein Bremsenquietschen vermeiden soll.

Aufgabe der Erfindung ist es, eine abstimmbare Einrichtung in einer Bremse zu schaffen, mit der ein Bremsenquietschen von Scheibenbremsen unterbunden werden kann.

Diese Aufgabe wird erfindungsgemäß durch die kennzeichnenden Merkmale des Anspruchs 1 gelost. Weitere vorteilhafte Merkmale beinhalten die Unteransprüche.

Die mit der Erfindung hauptsächlich erzielten Vorteile bestehen darin, daß den Reibschwingungen des Bremsbelages, welche sich durch Momenten- und Reibwertschwankungen ergeben, eine Dämpfungskraft entgegengesetzt wird. Diese Dämpfungskraft wird von einem Dämpfungselement aufgebracht, das im Bremskolben der Scheibenbremse angeordnet ist.

Dieses Dämpfungselement, bestehend aus in ein Medium des Bremskolbens eintauchenden Plattenelementen, bewirkt insbesondere auch durch seine schwenkbewegliche Verbindung mit dem Bremsbelag eine Abstimmung der Dämpfungskraft zur Bedämpfung der Scheibenbremse.

Diese schwenkbewegliche Verbindung umfaßt zum einen eine erste schwenkbewegliche Lagerung des Dämpfungselementes bzw. der Plattenelemente in einem Lagerdeckel des Kolbens und zum anderen eine zweite schwenkbewegliche Lagerung des Bremsbelages in der ersten Lagerung des Dämpfungselementes.

Diese beiden Lagerungen sind in der Weise ausgeführt, daß sich ein Übersetzungsverhältnis ausbildet, so daß entsprechend der Größe der zu erzielenden Dämpfungskraft die Lagerungen mit einem Übersetzungsmaß ausgestaltet werden können.

Zur Erzielung dieses Übersetzungsmaßes besteht die Lagerung des Bremsbelages aus einer Lagerkugel, die in eine entsprechend tiefe Aufnahme in der Lagerkugel des Dämpfungselementes angeordnet ist. Die Zentren dieser Lagerkugeln sind in einem entsprechenden Abstand zueinander angeordnet, so daß ein variables Übersetzungsmaß hergestellt werden kann.

Das Dämpfungselement ist eingetaucht in einem Medium des Kolbens vorgesehen, wobei sich die Plattenebene bzw. Ebenen senkrecht zur Bremsscheibe bzw. zum Bremsbelag erstrecken.

Durch die Auswahl des Dämpfungsmediums, der Auslegung des Dämpfungselementes und der Abstimmung des Übersetzungsverhältnisses kann eine sehr genaue Auslegung der Dämpfungskraft und somit der Abbau des Bremsenquietschens erreicht werden.

Eine Ausführungsbeispiel der Erfindung ist In der Zeichnung dargestellt und wird im folgenden näher beschrieben:

Es zeigen
- Fig. 1: einen Schnitt durch einen Bremskolben mit innenliegendem Dämpfungselement und
- Fig. 2: einen Schnitt nach der Linie II-II der Fig. 1.

Die Einrichtung 1 umfaßt ein in einem Bremskolben 2 einer Scheibenbremse angeordnetes Dämpferelement 3, das von einem Medium 4 umgeben ist, welches aus temperaturbeständigem Öl besteht.

Das Dämpferelement 3 ist aus mindestens einer Platte 5 gebildet, die in einer senkrechten Ebene zur Rückfläche 6 des Bremsbelages 7 bzw. Bremsscheibe 8 angeordnet ist.

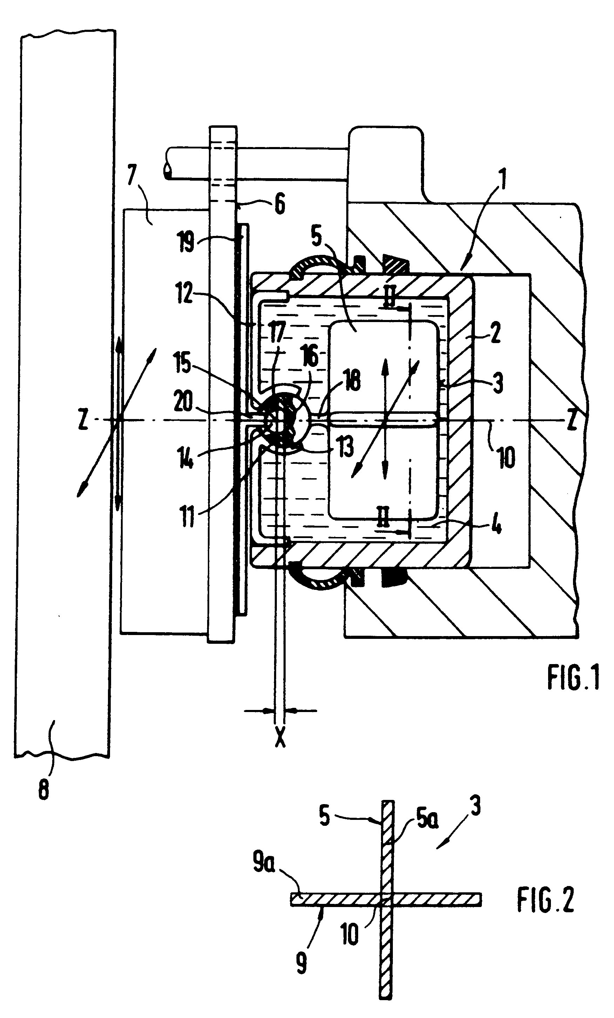

In Fig. 2 ist das Dämpferelement 3 im Querschnitt dargestellt und besteht aus kreuzförmig zueinander angestellten Platten 5 und 9, wobei die Mittenachse 10 des Elementes 3 endseitig eine Lagerkugel 11 aufweist. Diese ist in einer am Bremskolben 2 befestigten Lagerschale 12 in einer Lagerung 13 schwenkbeweglich gehalten. Die Lagerschale 12 dient gleichzeitig zum dichten Abschluß des Kolbens 2, um einem Austritt von Ölmedium entgegenzuwirken. Die Plattenabschnitte 5a und 9a der Platten 5 und 9 sind beispielsweise in einem rechten Winkel zueinander angeordnet.

In der Lagerkugel 11 ist über ein Kugelelement 14 der Bremsbelag 7 zentrisch abgestützt. Diese Lagerkugel 14 ist in einer zentrisch ausgebildeten trichterförmigen Ausnehmung 17 der Lagerkugel 11 des Elements 3 schwenkbeweglich gehalten. Das Zentrum 15 der Lagerkugel 14 ist im Abstand X zum Zentrum 16 der weiteren Lagerkugel 11 vorgesehen. Dieses Maß X kann entsprechend der Größe der zu erzielenden Dämpferkraft durch eine entsprechend tiefe Ausnehmung 7 variiert werden.

Das Kugelelement 11 ist endseitig an einem Ansatz 18 des Elements 3 angeordnet, wobei das weitere Lagerelement 14 an einer Befestigungsplatte 19 auf einem Bolzen 20 gehalten ist. Diese Platte 19 ist unter Zwischenschaltung eines Übertragungselementes, das aus einem elastischen Material bestehen kann, an der Belagrückfläche 6 befestigt.

## Patentansprüche

1. Einrichtung zum Dämpfen von Belagschwingungen an einer Bremse, insbesondere einer Scheibenbremse, die einen von einem Bremskolben betätigten Bremsbelag umfaßt, dadurch gekennzeichnet, daß der Bremsbelag (7) mit einem im Bremskolben (2) angeordneten Dämpferelement (3) verbunden ist, das in einem Dämpfungsmedium (4) eingetaucht schwenkbeweglich zum Bremsbelag (7) gehalten wird.

2. Einrichtung nach Anspruch 1, dadurch gekennzeichnet, daß das Dämpferelement (3) über eine Lagerkugel (11) schwenkbeweglich in einem Lagerungsdeckel (12) des Kolbens (2) gehalten wird und in der Lagerkugel (11) ein mit dem Bremsbelag (7) verbundene weitere Lagerkugel (14) gehalten ist.

3. Einrichtung nach den Ansprüchen 1 und 2, dadurch gekennzeichnet, daß die Lagerkugel (14) sich in einer trichterförmigen Ausnehmung (17) der Lagerkugel (11) des Elements (3) abstützt und der Mittelpunkt (16) dieser Lagerkugel (11) im Abstand (X) zum Mittelpunkt (15) der weiteren Lagerkugel (14) angeordnet ist.

4. Einrichtung nach Anspruch 1 und einem der vorhergehenden Ansprüche, dadurch gekennzeichnet, daß das Dämpferelement (3) aus mindestens einem Plattenelement (5) besteht, das sich in einer Mittenquerebene des Kolbens (2) erstreckt und in einer senkrechten Ebene (Z-Z) zur Belagrückenfläche (6) angeordnet ist.

5. Einrichtung nach Anspruch 1, dadurch gekennzeichnet, daß das Dämpferelement (3) aus zwei Plattenelementen (5, 9) besteht, die kreuzweise zueinander angeordnet sind und jeweils im rechten Winkel zueinanderstehende Plattenabschnitte (5a und 9a) umfassen.

6. Einrichtung nach Anspruch 1 oder einem der vorhergehenden Ansprüche, dadurch gekennzeichnet, daß die Plattenelemente (5 und 9) eine koaxial zum Kolben (2) angeordnete Mittenachse (10) aufweisen, in der die Lagerkugel (11) mit einem Ansatz (18) verbunden ist und in der Kugel (11) die weitere Lagerkugel (14) des Bremsbelags (7) gehalten ist, welche auf einem Bolzen (20) angeordnet und mit einer Platte (19) verbunden ist, die an der Rückfläche (6) des Bremsbelages (7) befestigbar ist.

## Claims

1. A device for damping vibrations in the lining of a brake, in particular a disc brake, comprising a brake lining actuated by a brake pistol **characterized in that** the brake lining (7) is connected to a damping member (3) arranged in the brake piston (2) and held immersed in a damping medium (4) and being pivotably movable with respect to the brake lining (7).

2. A device according to Claim 1, **characterized in that** the damping member (3) is held in a bearing cover (12) of the piston (2) so as to be pivotably movable by way of a bearing ball (11), and a further bearing ball (14) connected to the brake lining (7) is held in the bearing ball (11).

3. A device according to Claims 1 and 2, **characterized in that** the bearing ball (14) is supported in a funnel-shaped recess (17) in the bearing ball (11) of the member (3), and the centre (16) of the said bearing ball (11) is arranged at a distance (**X**) from the centre (15) of the further bearing ball (14).

4. A device according to Claim 1 and one of the preceding Claims, **characterized in that** the damping member (3) comprises at least one plate member (5) extending in a median transverse plane of the piston (2) and arranged in a plane (**Z-Z**) at right angles to the rear face (6) of the lining.

5. A device according to Claim 1**, characterized in that** the damping member (3) comprises two plate members (5, 9) arranged in a cruciform manner to each other and each comprising plate portions (5a and 9a) situated at right angles to each other.

6. A device according to Claim 1 or one of the preceding Claims, **characterized in that** the plate members (5 and 9) have a median axis (10) which is arranged coaxially with the piston (2) and in which the bearing ball (11) is connected to an attachment (18), and the further bearing ball (14) of the brake lining (7) is held in the ball (11), the further bearing ball (14) being mounted on a pin (20) and being connected to a plate (10) which can be secured to the rear face (6) of the brake lining (7).

## Revendications

1. Dispositif d'amortissement des vibrations des garnitures d'un frein, en particulier d'un frein à disque, comprenant une garniture de frein actionnée par un piston de frein, caractérisé en ce que la garniture de frein (7) est reliée à un élément amortisseur (3) disposé dans le piston de frein (2) et maintenu plongé dans un fluide d'amortissement (4), de façon à pouvoir se déplacer en pivotement par rapport à la garniture de frein (7).

2. Dispositif selon la revendication 1, caractérisé en ce que l'élément amortisseur (3) est maintenu, par l'intermédiaire d'une sphère de palier (11), de façon à pouvoir se déplacer par pivotement dans un couvercle de palier (12) du piston (2) et une deuxième sphère de palier (14), reliée à la garniture de frein (7) est maintenue dans la sphère de palier (11).

3. Dispositif selon les revendications 1 et 2, caractérisé en ce que la bille de palier (14) prend appui dans un évidement (37) en entonnoir de la sphère de palier (11) de l'élément amortisseur (3) et le centre (16) de cette sphère de palier (11) étant disposé à distance (X) du centre (15) de la deuxième sphère de palier (14).

4. Dispositif selon la revendication 1 et l'une des revendications précédentes, caractérisé en ce que l'élément amortisseur (3) est composé au moins d'un élément en forme de plaque (5) s'étendant dans un plan transversal médian du piston (2) et disposé dans un plan (Z-Z) perpendiculaire par rapport à la surface arrière de garniture (6).

5. Dispositif selon la revendication 1, caractérisé en ce que l'élément amortisseur (3) est composé de deux éléments en forme de plaque (5, 9, disposés en croix l'un par rapport à l'autre et comprenant chacun des sections de plaque (5a et 9a) placées perpendiculairement l'une par rapport à l'autre.

6. Dispositif selon la revendication 1 ou l'une des revendications précédentes, caractérisé en ce que les éléments en forme de plaque (5a et 9a) présentent un axe (10) disposé coaxialement par rapport au piston (2), axe dans lequel la sphère de palier (11) est reliée à un appendice (18) et, la deuxième sphère de palier (14) de la garniture de frein (7) étant maintenue dans la sphère (11) et est disposée sur un goujon (9) et reliée à une plaque (19) pouvant être fixée en face arrière (6) de la garniture de frein (7).
